# EUROPÄISCHE PATENTSCHRIFT

(11) **EP 0 694 005 B1**
(45) Veröffentlichungstag und Bekanntmachung des Hinweises auf die Patenterteilung: **24.09.1997**
(21) Anmeldenummer: 93908954.6
(22) Anmeldetag: 19.04.1993
(51) Int. Cl.: B60T 13/567, B60T 13/565

(54) **BETÄTIGUNGSEINHEIT FÜR EINE HYDRAULISCHE KRAFTFAHRZEUGBREMSANLAGE**
ACTUATING UNIT FOR A HYDRAULIC BRAKING SYSTEM FOR MOTOR VEHICLES
UNITE D'ACTIONNEMENT D'UN SYSTEME HYDRAULIQUE DE FREINAGE POUR VEHICULES A MOTEUR

(43) Veröffentlichungstag der Anmeldung: 31.01.1996
(73) Patentinhaber: ITT Automotive Europe GmbH, 60488 Frankfurt am Main (DE)
(72) Erfinder: BAUER, Jürgen, D-6200 Wiesbaden (DE)
(86) Internationale Anmeldenummer: EP9300937
(87) Internationale Veröffentlichungsnummer: WO9423977

(56) Entgegenhaltungen:
- FR-A- 2 476 575
- PATENT ABSTRACTS OF JAPAN vol. 11, no. 333 (M-637)30. Oktober 1987 & JP,A,62 116 348 (NISSIN KOGYO KK) 27. Mai 1987
- PATENT ABSTRACTS OF JAPAN vol. 8, no. 207 (M-327)(1644) 21. September 1984 & JP,A,59 096 048 (JIDOSHA KIKI KK) 2. Juni 1984
- PATENT ABSTRACTS OF JAPAN vol. 10, no. 88 (M-467)(2145) 5. April 1986 & JP,A,60 226 350 (JIDOSHA KIKI KK) 11. November 1985

## Beschreibung

Die Erfindung betrifft eine Betätigungseinheit für eine hydraulische Kraftfahrzeugbremsanlage, bestehend aus einem pneumatischen Bremskraftverstärker, sowie einer dem Bremskraftverstärker wirkungsmäßig nachgeschalteten, voneinander getrennte Druckräume aufweisenden Hauptbremszylinderanordnung wobei der Bremskraftverstärker ein Verstärkergehäus aufweist, dessen Innenraum durch eine bewegliche Wand in eine Unterdruckkammer sowie eine Arbeitskammer unterteilt ist, wobei zwei parallel zur Längsache des Bremskraftverstärkers angeordnete Kraftübertragungsbolzen vorgesehen sind, die Befestigungselemente tragen, die einer Karosseriewand zugeordnet sind, und wobei die Druckräume in rohrförmigen Hauptzylindergehäusen ausgebildet sind.

Eine derartige Betätigungseinheit ist aus der JP-A 62 116 348 bekannt. Das Besondere an der vorbekannten Betätigungseinheit besteht darin, daß die Hauptzylindergehäuse der Hauptbremszylinderanordnung einteilig mit der beweglichen Wand ausgebildet und in Dichtringen geführt sind, die die Abdichtung der Hauptbremszylindergehäuse gegenüber dem Verstärkergehäuse gewährleisten. In den Hauptzylindergehäusen sind Kolben axial verschiebbar geführt, die sich an zwei parallel zur Längsachse des Bremskraftverstärker angeordneten Kraftübertrgagungsbolzen abstützen, die der Befestigung der Betätigungseinheit an einer Karosseriewand eines Fahrzeuges dienen.

Weniger vorteilhaft ist bei der vorbekannten Betätigungseinheit die Führung der beweglichen Wand bzw. der Hauptzylindergehäuse im Verstärkergehäuse anzusehen, die lediglich aus den vorhin erwähnten Dichtringen sowie einem dritten Dichtring besteht, der eine Abdichtung des Steuergehäuses gegenüber dem Verstärkergehäuse gewährleistet. So können aufgrund von auf die bewegliche Wand einwirkenden Kippmomenten insbesondere im Durchtrittsbereich der beiden Hauptzylindergehäuse Undichtigkeiten auftreten, die unter Umständen zum Ausfall des Bremskraftverstärkers führen können.

Es ist daher Aufgabe der vorliegenden Erfindung, Maßnahmen vorzuschlagen, die eine wesentliche Verbesserung der Führung der Hauptzylindergehäuse und somit eine Erhöhung der Funktionssicherheit der Betätigungseinheit der eingangs genannten Gattung ermöglichen.

Die Aufgabe wird erfindungsgemäß dadurch gelöst, daß die Kraftübertragungsbolzen sich durch das Verstärkergehäuse sowie die bewegliche Wand hindurch erstrecken, und daß die Hauptzylindergehäuse auf den Kraftübertragungsbolzen verschiebbar geführt sind und mit einem Ausgangsglied in kraftübertragender Verbindung stehen, das sowohl die Eingangs- als auch die Verstärkungskraft des Bremskraftverstärkers überträgt.

Die Hauptzylindergehäuse sind dabei gegenüber der beweglichen Wand mittels der die bewegliche Wand gegenüber dem Verstärkergehäuse abdichtenden Rollmembran abgedichtet, die dabei vorzugsweise um die Hauptzylindergehäuse konzentrisch angeordnete Rollfalten bildet.

Um die Rollfalten wirksam vor Beschädigungen zu schützen ist bei einer vorteilhaften Weiterbildung der Erfindung vorgesehen, daß ein die bewegliche Wand bildende Membranteller im Durchtrittsbereich der Hauptzylindergehäuse ringförmige Fortsätze aufweist, die die Rollfalten aufnehmen. Außerdem wird dadurch erreicht, daß beim Evakuieren des Verstärkergehäuses Rückstellkräfte entstehen, die die Hauptzylindergehäuse in ihre Ausgangslage zurückbringen.

Bei einer anderen Ausführungsform des Erfindungsgegenstandes erfolgt die Kraftübertragung vom Ausgangsglied auf die Hauptzylindergehäuse mittels eines am Ausgangsglied anliegenden, begrenzt kippbaren Steuerhebels, der mit zwei an den Hauptzylindergehäusen radial gegenüberliegend angeordneten Zapfen zusammenwirkt. Durch diese Maßnahme wird auf eine einfache Art ein Volumenausgleich zwischen beiden an die Druckräume angeschlossenen hydraulischen Kreisen ermöglicht.

Eine sichere Anlage des Steuerhebels am Ausgangsglied wird dadurch erreicht, daß am Steuerhebel eine die bewegliche Wand entgegen der Betätigungsrichtung vorspannende Rückstellfeder abgestützt ist.

Um sicherzustellen, daß die Hauptzylindergehäuse nach erfolgter Betätigung bei Vakuumausfall in die Ausgangsposition zurückgebracht werden, sieht eine weitere vorteilhafte Ausführung der erfindungsgemäßen Betätigungseinheit vor, daß koaxial zu den Hauptzylindergehäusen Druckfedern angeordnet sind, die die Hauptzylindergehäuse gegen den Steuerhebel vorspannen. Außerdem wird dadurch eine einwandfreie Anlage der an den Hauptzylindergehäusen ausgebildeten radialen Zapfen am Steuerhebel gewährleistet.

Eine die Unterdruckkammer des Bremskraftverstärkers begrenzende Gehäusehälfte des Verstärkergehäuses weist vorzugsweise Durchtrittsöffnungen auf, in denen die Hauptzylindergehäuse in Dichtungen geführt sind, in denen Anschlußstutzen eines mit den Druckräumen verbindbaren Druckmittelvorratsbehälters eingeknöpft sind. Dadurch werden günstige Voraussetzungen für die Ausbildung von für die einwandfreie Funktion der Betätigungseinheit notwendigen Nachlaufräumen geschaffen.

Dabei ist es besonders vorteilhaft, wenn die Druckfedern im Bereich der Durchtrittstöffnungen an je einem die Dichtungen umgreifenden Führungstopf abgestützt sind.

Eine kostengünstig herstellbare vorteilhafte Weiterbildung des Erfindungsgegenstandes sieht vor, daß die Verbindung zwischen den hydraulischen Anschlüssen und den Druckräumen über in den Kraftübertragungsbolzen senkrecht zueinander verlaufende Kanäle erfolgt, wobei die an die hydraulischen Anschlüsse anschließenden Kanäle durch zentrale Längsbohrungen der Kraftübertragungsbolzen gebildet sind.

Ein druckloser Zustand der Druckräume in der Lösestellung der erfindungsgemäßen Betätigungseinheit wird dadurch gewährleistet, daß zwischen den Druckräumen und dem Druckmittelvorratsbehälter eine bei der Betätigung absperrbare hydraulische Verbindung vorgesehen ist. Das Absperren der hydraulischen Verbindung erfolgt mittels eines auf dem Kraftübertragungsbolzen begrenzt verschiebbar angeordneten, beispielsweise aus einer Dichtmanschette, einer Trennscheibe sowie einer Abstützplatte bestehenden Dichtpakets, das in Ruhestellung unter der Vorspannung einer Feder an einem Anschlag anliegt. Die hydraulische Verbindung ist dabei vorzugsweise durch einen von dem in den Druckmittelvorratsbehälter hineinragenden Ende des Hauptzylindergehäuses begrenzten Ringraum, eine im Ringraum mundende axiale Nut der Abstützplatte sowie eine im Kraftübertragungsbolzen senkrecht zu seiner Längsachse ausgebildete Querbohrung gebildet, wobei die Querbohrung in dem an den Anschluß anschließenden Kanal mündet. Durch diese Maßnahmen werden günstige Voraussetzungen für den Einsatz der Betätigungseinheit nach der Erfindung bei einer blockiergeschützten Bremsanlage geschaffen.

Um eine direkte Übertragung einer aus dem in den Druckräumen herrschenden hydraulischen Druck resultierenden Reaktionskraft auf die Karosseriewand zu erreichen, weist der Kraftübertragungsbolzen eine Ringfläche auf, an der das Dichtpaket bei Betätigung zur Anlage kommt. Die erwähnte Ringfläche kann jedoch auch auf einem zweiten Teil eines zweiteilig ausgeführten Kraftübertragungsbolzens ausgebildet sein. Diese Maßnahme ermöglicht im Bedarfsfall eine Demontage des Hauptzylindergehäuses.

Eine andere vorteilhafte Weiterbildung des Erfindungsgegenstandes sieht vor, daß der Anschlag durch einen Sicherungsring gebildet ist, der in einer im Hauptzylindergehäuse ausgebildeten Ringnut angeordnet ist, deren Breite größer ist als die Dicke des Sicherungsringes. Diese Maßnahme ermöglicht eine einfache Einstellung des Hauptzylinderleerweges durch Änderung der Dicke des Sicherungsringes.

Um in einem Bedarfsfall, beispielsweise beim Entstehen eines Unterdrucks in einem der Druckräume, ein Nachsaugen des Druckmittels aus dem Druckmittelvorratsbehälter zu ermöglichen, weist die Abstützplatte axiale Nachsaugbohrungen auf.

Die das verschiebbare Dichtpaket vorspannende Feder ist mit ihrem anderen Ende an einem zweiten Dichtpaket abgestützt, das das Hauptzylindergehäuse gegenüber dem Kraftübertragungsbolzen abdichtet und durch eine zylindrische Hülse gebildet ist, die eine mit dem Kraftübertragungsbolzen zusammenwirkende Dichtmanschette sowie eine mit dem Hauptzylindergehäuse zusammenwirkende Dichtung aufnimmt.

Die Erfindung ist im nachfolgenden Text im Zusammenhang mit der beiliegenden Zeichnung an einem Ausführungsbeispiel näher erläutert. In der Zeichnung zeigt:
- Fig. 1: eine Betätigungseinheit nach der Erfindung im Axialschnitt,
- Fig. 2: eine Teilansicht der Betätigungseinheit nach Fig. 1 in Richtung "A" nach Fig. 1,
- Fig. 3: eine Hälfte der Hauptzylinderanordnung in einer Schnittdarstellung, stark vereinfacht.

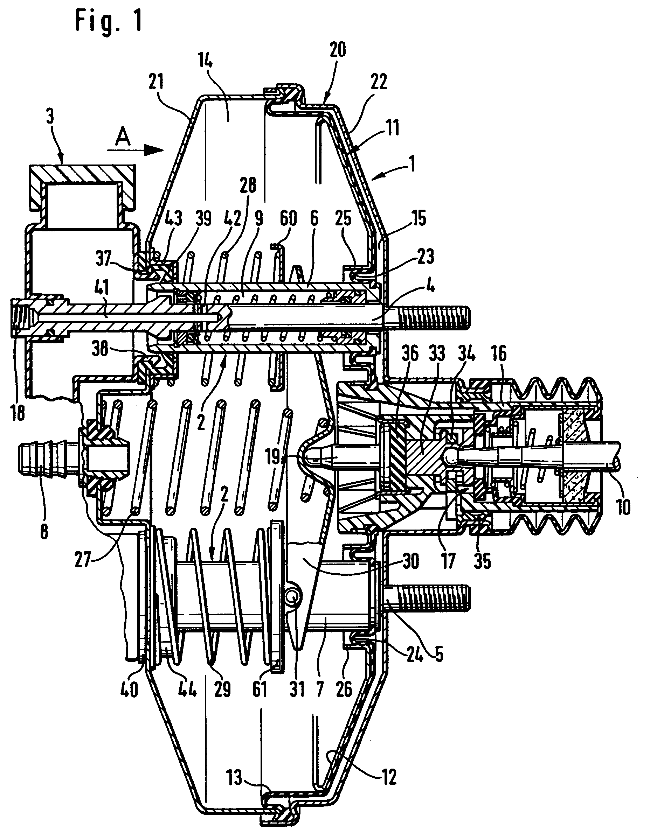

Die in der Zeichnung gezeigte erfindungsgemäße Betätigungseinheit besteht aus einem Unterdruckbremskraftverstärker 1, der über ein Eingangsglied 10 durch ein nicht gezeigtes Bremspedal betätigbar ist, sowie einer dem Unterdruckbremskraftverstärker 1 nachgeschalteten Hauptbremszylinderanordnung 2, deren Druckräume 9, mit einem Druckmittelvorratsbehälter 3 in Verbindung stehen. Der Unterdruck-Bremskraftverstärker 1 weist dabei zwei schalenförmige, mit ihren offenen Seiten zusammengebaute Gehäusehälfte 21, 22 auf, die ein Verstärkergehäuse 20 bilden. Die in Fig. 1 linke Gehäusehälfte 21 ist mit einem pneumatischen Anschluß 8 versehen, während in der rechten Gehäusehälfte 22 ein Steuergehäuse 16 gleitend und abgedichtet geführt ist, in dem ein Steuerventil 17 angeordnet ist, das mittels eines mit dem nicht gezeigten Bremspedal gekoppelten Eingangsglied 10 betätigbar ist. An seinem dem Eingangsglied 10 abgewandten Ende trägt das Steuergehäuse 16 eine durch einen Membranteller 12 sowie eine daran anliegende Rollmembran 13 gebildete bewegliche Wand 11, die das Innere des Verstärkergehäuses 20 in eine evakuierbare Unterdruckkammer 14 sowie eine Arbeitskammer 15 unterteilt, wobei das Steuerventil 17 eine Verbindung zwischen der Arbeitskammer 15 und der Unterdruckkammer 14 oder der Atmosphäre ermöglicht. Das an sich bekannte Steuerventil 17 ist durch einen im Steuergehäuse 16 geführten, mit dem Eingangsglied 10 in kraftübertragender Verbindung stehenden Ventilkolben 33 betätigbar, dessen Rückkehrbewegung durch ein Querglied 34 begrenzt ist, das in Lösestellung an einem Gleitdichtring 35 axial anliegt. Der Ventilkolben 33 steht in kraftübertragender Verbindung mit einer in einer zylindrischen Ausnehmung des Steuergehäuses 16 angeordneten gummielastischen Reaktionsscheibe 36, die eine Übertragung sowohl der am Eingangsglied 10 eingeleiteten Betätigungskraft als auch der von der beweglichen Wand 11 aufgebrachten Verstärkungskraft auf ein Ausgangsglied 19 ermöglicht, das mit einem begrenzt kippbar sich daran abstützenden Steuerhebel 30 zusammenwirkt. Der Steuerhebel 30 liegt dabei an dem kugelabschnittförmig ausgebildeten Ende des Ausgangsglieds bzw. der Druckstange 19 unter der Wirkung einer die bewegliche Wand 11 entgegen der Betätigungsrichtung vorspannenden Rückstellfeder 27 an, wobei am Steuerhebel 30 je zwei radial gegenüberliegend angeordnete Zapfen 31,32 anliegen, die eine Übertragung der Ausgangskraft des Bremskraftverstärkers 1 auf zwei pneumatisch zur Bremskraftverstärker-Längsachse angeordnete, begrenzt bewegbare Hauptzylindergehäuse 6,7 ermöglichen.

Wie der Fig. 1 weiter zu entnehmen ist, weist der Bremskraftverstärker 1 Mittel auf, die seiner Befestigung an einer nicht gezeigten Karosseriewand dienen. Zu diesem Zweck sind zwei stabförmige Kraftübertragungsbolzen 4,5 vorgesehen, die parallel zur Bremskraftverstärker-Längsachse angeordnet sind und deren aus der in der Zeichnung rechts gezeigten Gehäusehälfte 22 herausragende Enden die der Karosseriewand zugeordneten Befestigungselemente bilden. Die vorhin erwähnten Druckräume 9,- der Hauptzylinderanordnung 2 werden nach außen durch die auf den Kraftübertragungsbolzen 4,5 verschiebbar geführten rohrförmigen Hauptzylindergehäuse 6,7 begrenzt, die sowohl gegenüber der beweglichen Wand 11 als auch gegenüber der in der Zeichnung links gezeigten Gehäusehälfte 21 abgedichtet sind. Für die Abdichtung der Hauptzylindergehäuse 6,7 gegenüber der beweglichen Wand 11 sorgen Rollfalten 23,24, die mit der Rollmembran 13 einteilig ausgebildet und von ringförmigen Fortsätzen 25,26 des Mebrantellers 12 aufgenommen sind.

Um ein Verschieben der rohrförmigen Hauptzylindergehäuse 6,7 zum Zweck eines Druckaufbaus in den Druckräumen 9,- zu ermöglichen, weist die linke Gehäusehälfte 21 Durchtrittsöffnungen 37,- auf, in denen Dichtungen 39,40 angeordnet sind, die die Hauptzylindergehäuse 6,7 gegenüber der linken Gehäusehälfte 21 abdichten. In den Dichtungen 39,40 sind Anschlußstutzen 38,- des Druckmittelvorratsbehälters 3 eingeknöpft, wobei die Anordnung derart getroffen ist, daß die Hauptzylindergehäuse 6,7 bei der Betätigung ins Innere des Druckmittelvorratsbehälters 3 verschoben werden.

Um an die hydraulischen Druckräume 9,- nicht gezeigte Bremsleitungen anschließen zu können, bilden die der Karosseriewand abgewandten, durch den Druckmittelvorratsbehälter 3 hindurch sich erstreckenden Enden der Kraftübertragungsbolzen 4,5 hydraulische Anschlüsse 18,-, die über in den Kraftübertragungsbolzen 4,5 ausgebildeten Kanäle 41,42 mit den Druckräumen 9,-verbunden sind. Eine sichere Anlage der an den Hauptzylindergehäuse 4,5 angeformten radialen Zapfen 31,32 am Steuerhebel 30 wird durch zwei um die Hauptzylindergehäuse 6,7 koaxial angeordnete Druckfedern 28,29 erreicht, die die Hauptzylindergehäuse 6,7 nach erfolgter Bremsung in die Ausgangslage zurückbringen. Die Druckfedern 28,29 stützen sich mit einem Ende an je einem an den Zapfen 31, 32 axial anliegenden Druckteller 60,61 ab, während sie mit ihrem anderen Ende an je einem innerhalb der Unterdruckkammer 14 angeordneten, an dem Gehäusehälfte 21 anliegenden Führungstopf 43,44 anliegen, der den ins Innere des Verstärkergehäuses 20 hineinragenden Teil der Dichtung 39,40 aufnimmt.

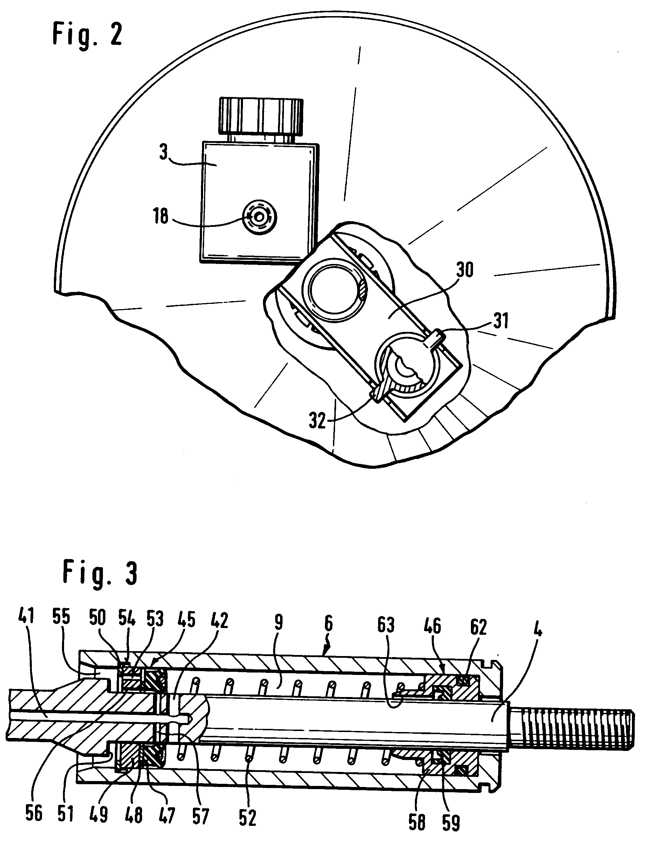

Um zu gewährleisten, daß sich die Hauptzylindergehäuse-Druckräume 9,- in der Lösestellung der Betätigungseinheit im drucklosen Zustand befinden, ist zwischen ihnen und dem drucklosen Druckmittelvorratsbehälter 3 eine hydraulische Verbindung vorgesehen, die bei der Betätigung abgesperrt wird, um in den Druckräumen 9,- einen hydraulischen Druck aufzubauen. Wie insbesondere Fig. 3 zeigt, erfolgt die erwähnte Nachlaufverbindung über den durch den Kraftübertragungsbolzen 4 quer hindurch sich erstreckenden Kanal 42, einen kurzen, näher nicht bezeichneten Abschnitt des Längskanals 41 sowie eine im Kraftübertragungsbolzen 4 ausgebildete Querbohrung 57, die mit einem durch das Hauptzylindergehäuse 6 im Druckmittelvorratsbehälter 3 begrenzten Ringraum bzw. Nachlaufraum 55 in Verbindung steht. Das Absperren der Nachlaufverbindung erfolgt durch ein im Hauptzylindergehäuse 6 bzw. auf dem Kraftübertragungsbolzen 4 begrenzt verschiebbar angeordnetes Dichtpaket 45, das in Ruhestellung, mittels einer Feder 52 vorgespannt, an einem hauptzylindergehäusefesten Anschlag, beispielsweise einem Sicherungsring 50, anliegt. Das Dichtpaket 45 besteht aus einer am Sicherungsring 50 sich abstützenden Abstützplatte 49, einer elastischen Dichtmanschette 47 sowie einer dazwischen angeordneten dünnen Trennscheibe 48. Die Abstützplatte 49 ist dabei mit mindestens einer axial verlaufenden Nut 56 versehen, die den Nachlaufraum 55 mit dem Bereich verbindet, in dem die Querbohrung 57 mündet. Außerdem sind in der Abstützplatte 49 axial verlaufende Nachsaugbohrungen 53 vorgesehen, die im Nachlaufraum 55 münden und die beim Auftreten eines Unterdrucks im Druckraum 9 ein Nachsaugen des Druckmittels an der radial außenliegenden Dichtlippe der Dichtmanschette 47 vorbei ermöglichen. Der den Anschlag bildende Sicherungsring 50 befindet sich in einer im Hauptzylindergehäuse 6 ausgebildeten Ringnut 54, deren Breite vorzugsweise größer ist als die Materialdicke des Sicherungsringes 50, so daß durch Einlegen unterschiedlich dicker Sicherungsringe 50 die Position des Dichtpakets 45 gegenüber der Querbohrung 57 und somit der Betätigungsleerweg geändert werden kann.
Um die bei der Betätigung auftretende axiale Verschiebung des Dichtpakets 45 zu begrenzen, weist der Kraftübertragungsbolzen 4 eine Ringfläche 51 auf, an der das Dichtpaket 45 zur Anlage kommt.

Um schließlich den Druckraum 9 nach außen hin abzudichten ist an dem der Karosseriewand zugewandten Ende des Hauptzylindergehäuses 6 ein zweites Dichtpaket 46 vorgesehen, das durch eine auf dem Kraftübertragungsbolzen 4 verschiebbar geführte, zwei Dichtelemente 59,62 aufnehmende zylindrische Hülse 58 gebildet ist, die gleichzeitig als Anlage für die das erste Dichtpaket 45 vorspannende Feder 52 dient. Die Dichtelemente werden dabei durch eine mit dem Kraftübertragungsbolzen 4 zusammenwirkende Dichtmanschette 59 sowie einem an der Wandung des Hauptzylindergehäuses 6 anliegenden Dichtring 62 gebildet. Die zwischen der Dichtmanschette 59 und der Oberfläche des Kraftübertragungsbolzens 4 bei der Betätigung entstehende Reibung wird durch in der Hülse 58 ausgebildeten Nuten 63 minimiert, die die Dichtmanschette 59 mit Druckmittel versorgen.

Die Funktion des bei der erfindungsgemäßen Betätigungseinheit verwendeten Unterdruckbremskraftverstärkers 1 ist dem einschlägigen Fachmann geläufig und braucht deshalb nicht ausführlich erörtert zu werden. Die bei der Betätigung erzeugte Ausgangskraft wird über den Steuerhebel 30 auf die Hauptbremszylindergehäuse 6,7 übertragen, die in Betätigungsrichtung verschoben werden. Mit dem Hauptzylindergehäuse 6, wird auch unter der Wirkung der Feder 52 das erste Dichtpaket 45 so weit verschoben, bis die Abstützplatte 49 an der am Kraftübertragungsbolzen 4 ausgebildeten Ringfläche 51 zur Anlage kommt. Dabei überfährt die radial innenliegende Dichtlippe der Dichtmanschette 47 die Querbohrung 57, so daß der Druckraum 9 vom Nachlaufraum 55 getrennt wird. Der im Druckraum 9 erzeugte hydraulische Druck wird über die Kanäle 42,41, den hydraulischen Anschluß 18 sowie nicht gezeigte Bremleitungen an die Radbremsen des Kraftfahrzeuges geleitet. Die aus dem in den Druckräumen 9,-herrschenden Druck resultierenden Reaktionskräfte werden über die Ringfläche 51,- in die Kraftübertragungsbolzen 4,5 eingeleitet und direkt auf die Karosseriewand übertragen.

Bei der Rückkehrbewegung der beweglichen Wand 11 in die Ausgangsposition kehren auch die Hauptzylindergehäuse 6,7 unter der Wirkung der Druckfedern 28,29 in die in Fig. 1 gezeigte Ausgangslage zurück. Durch das Mitnehmen des ersten Dichtpakets 45 vom Anschlag 50 wird die Querbohrung 57 von der radial innenliegenden Dichtlippe der Dichtmanschette 47 überfahren, so daß die hydraulische Verbindung zwischen dem Druckraum 9 und dem Nachlaufraum 55 bzw.dem Druckmittelsvorratsbehälter 3 freigegeben wird. Das Öffnen der erwähnten Verbindung kann nicht nur, wie beschrieben, über die Druckfedern 28,29 erfolgen, sondern auch über eine Zwangsmitnahme der Hauptzylindergehäuse 6,7 mit Hilfe des Steuerhebels 30. Ein Nachsaugen erfolgt in bekannter Weise über die Nachsaugbohrungen 53 und die radial außenliegende Dichtlippe der Dichtmanschette 47.

Ein Volumenausgleich zwischen den beiden Hauptzylindereinheiten erfolgt mittels des Steuerhebels 30 bzw. seine bewegliche Abstützung an der Druckstange 19. Der Bereich des Steuerhebels 30, in dem die Zapfen 31,32 sich am Steuerhebel 30 abstützen, ist vorzugsweise so gestaltet, daß bei unterschiedlicher Volumenaufnahme auf die Hauptzylindergehäuse 6,7 keine Querkraftkomponenten wirken.

Während eines Kreisausfalls legt sich der Steuerhebel 30 nach Überfahren eines vorgegebenen Winkels auf der Seite des intakten Kreises an das Steuergehäuse 16 an, so daß nur eine begrenzte Wegdifferenz vorgesehen wird, die 20% des Betätigungshubes entspricht. Damit wird ein Pedaldurchfallen bei Kreisausfall erheblich reduziert.

Das Einstellen der Hauptzylinderleerwege ist bei jeder Hauptzylindereinheit von außen (ohne Druckmittelvorratsbehälter) beispielsweise durch Lufteinblasen möglich. Zu diesem Zweck wird der Abstand zwischen den in der Zeichnung linken Flanke der Ringnut 54 und der mit der Querbohrung 57 zusammenwirkenden Dichtlippe der Dichtmanschette 47 über Änderung der axialen Lage des Anschlages 50 variiert. Dies kann beispielsweise, wie bereits erwähnt, durch Änderung der Dicke des Sicherungsrings 50 oder ein Gewinde realisiert werden.

### Bezugszeichenliste

- 1: Bremskraftverstärker
- 2: Hauptzylinderanordnung
- 3: Druckmittelvorratsbehälter
- 4: Kraftübertragungsbolzen
- 5: Kraftübertragungsbolzen
- 6: Hauptzylidergehäuse
- 7: Hauptzylindergehäuse
- 8: Unterdruckanschluß
- 9: Druckraum
- 10: Eingangsglied
- 11: bewegliche Wand
- 12: Membranteller
- 13: Rollmembran
- 14: Unterdruckkammer
- 15: Arbeitskammer
- 16: Steuergehäuse
- 17: Steuerventil
- 18: Anschluß
- 19: Ausgangsglied, Druckstange
- 20: Verstärkergehäuse
- 21: Gehäusehälfte
- 22: Gehäusehälfte
- 23: Rollfalte
- 24: Rollfalte
- 25: Fortsatz
- 26: Fortsatz
- 27: Rückstellfeder
- 28: Druckfeder
- 29: Druckfeder
- 30: Steuerhebel
- 31: Zapfen
- 32: Zapfen
- 33: Ventilkolben
- 34: Querglied
- 35: Dichtring
- 36: Reaktionsscheibe
- 37: Durchtrittsöffnung
- 38: Anschlußstutzen
- 39: Dichtung
- 40: Dichtung
- 41: Kanal
- 42: Kanal
- 43: Führungstopf
- 44: Führungstopf
- 45: Dichtpaket
- 46: Dichtpaket
- 47: Dichtmanschette
- 48: Trennscheibe
- 49: Abstützplatte
- 50: Anschlag, Sicherungsring
- 51: Ringfläche
- 52: Feder
- 53: Nachsaugbohrung
- 54: Ringnut
- 55: Ringraum
- 56: Nut
- 57: Querbohrung
- 58: Hülse
- 59: Dichtmanschette
- 60: Druckteller
- 61: Druckteller
- 62: Dichtung
- 63: Nut

## Patentansprüche

1. Betätigungseinheit für eine hydraulische Kraftfahrzeugbremsanlage, bestehend aus einem pneumatischen Bremskraftverstärker (1), sowie einer dem Bremskraftverstärker (1) wirkungsmäßig nachgeschalteten, voneinander getrennte Druckräume (9,-) aufweisenden Hauptbremszylinderanordnung (2), wobei der Bremskraftverstärker (1) ein Verstärkergehäuse (20) aufweist, dessen Innenraum durch eine bewegliche Wand (11) in eine Unterdruckkammer (14) sowie eine Arbeitskammer (15) unterteilt ist, wobei zwei parallel zur Längsache des Bremskraftverstärkers (1) angeordnete Kraftübertragungsbolzen (4,5) vorgesehen sind, die Bestigungselemente tragen, die einer Karosseriewand zugeordnet sind, und wobei die Druckräume (9,-) in rohrförmigen Hauptzylindergehäusen (6,7) ausgebildet sind, dadurch **gekennzeichnet**, daß die Kraftübertragungsbolzen (4,5) sich durch das Verstärkergehäuse (20) sowie die bewegliche Wand (11) hindurch erstrecken, und daß die Hauptzylindergehäuse (6,7) auf den Kraftübertragungsbolzen (4,5) verschiebbar geführt sind und mit einem Ausgangsglied (19) in kraftübertragender Verbindung stehen, das sowohl die Eingangs- als auch die Verstärkungskraft des Bremskraftverstärkers (1) überträgt.

2. Betätigungseinheit nach Anspruch 1, dadurch **gekennzeichnet**, daß die der Karosseriewand abgewandten Enden der Kraftübertragungsbolzen (4,5) mit den Druckräumen (9,-) in Verbindung stehende hydraulische Anschlüsse (18,-) bilden.

3. Betätigungseinheit nach Anspruch 1, wobei die bewegliche Wand aus einem Membranteller sowie einer daran anliegenden Rollmembran besteht, dadurch **gekennzeichnet**, daß die Hauptzylindergehäuse (6,7) gegenüber der beweglichen Wand (11) mittels der Rollmembran (13) abgedichtet sind.

4. Betätigungseinheit nach Anspruch 3, dadurch **gekennzeichnet**, daß die Rollmembran (13) um die Hauptzylindergehäuse (6,7) konzentrisch angeordnete Rollfalten (23,24) bildet.

5. Betätigungseinheit nach Anspruch 4, dadurch **gekennzeichnet**, daß der Membranteller (12) im Durchtrittsbereich der Hauptzylindergehäuse (6,7) ringförmige Fortsätze (25,26) aufweist, die die Rollfalten (23,24) aufnehmen.

6. Betätigungseinheit nach Anspruch 1, dadurch **gekennzeichnet**, daß die Kraftübertragung vom Ausgangsglied (19) auf die Hauptzylindergehäuse (6,7) mittels eines am Ausgangsglied (19) anliegenden begrenzt kippbaren Steuerhebels (30) erfolgt, der mit den Hauptzylindergehäusen (6,7) kraftübertragend zusammenwirkt.

7. Betätigungseinheit nach Anspruch 6, dadurch **gekennzeichnet**, daß am Steuerhebel (30) eine die bewegliche Wand (11) entgegen der Befestigungsrichtung vorspannende Rückstellfeder (27) abgestützt ist.

8. Betätigungseinheit nach einem der vorhergehenden Ansprüche, dadurch **gekennzeichnet**, daß koaxial zu den Hauptzylindergehäusen (6,7) Druckfedern (28,29) angeordnet sind, die die Hauptzylindergehäuse (6,7) gegen den Steuerhebel (30) vorspannen.

9. Betätigungseinheit nach Anspruch 8, wobei das Verstärkergehäuse aus zwei einander gegenüberliegenden Gehäusehälften besteht, dadurch **gekennzeichnet**, daß die die Unterdruckkammer (14) begrenzende Gehäusehälfte (21) Durchtrittsöffnungen (37,-) aufweist, in denen die Hauptzylindergehäuse (6,7) abgedichtet geführt sind.

10. Betätigungseinheit nach Anspruch 9, dadurch **gekennzeichnet**, daß in den Durchtrittsöffnungen (37,-) Dichtungen (39,40) angeordnet sind, in denen Anschlußstutzen (38,-) eines mit den Druckräumen (9,-) verbindbaren Druckmittelvorratsbehälters (3) eingeknöpft sind.

11. Betätigungseinheit nach einem der Ansprüche 8 bis 10, dadurch **gekennzeichnet**, daß die Druckfedern (28,29) im Bereich der Durchtrittsöffnungen (37,-) an je einem die Dichtungen (39,40) umgreifenden Führungstopf (43,44) abgestützt sind.

12. Betätigungseinheit nach Anspruch 2, dadurch **gekennzeichnet**, daß die Verbindung zwischen den hydraulischen Anschlüssen (18,-) über in den Kraftübertragungsbolzen (4,5) senkrecht zueinander verlaufende Kanäle (41,42) erfolgt, wobei die an die hydraulischen Anschlüsse (18,-) anschließenden Kanäle (41) durch zentrale Längsbohrungen der Kraftübertragungsbolzen (4,5) gebildet sind.

13. Betätigungseinheit nach einem der vorhergehenden Ansprüche, dadurch **gekennzeichnet**, daß zwischen den Druckräumen (9,-) und dem Druckmittelvorratsbehälter (3) eine bei der Betätigung absperrbare hydraulische Verbindung vorgesehen ist.

14. Betätigungseinheit nach Anspruch 13, dadurch **gekennzeichnet**, daß die hydraulische Verbindung mittels eines auf dem Kraftübertragungsbolzen (4) begrenzt verschiebbar angeordneten, beispielsweise aus einer Dichtmanschette (47), einer Trennscheibe (48) sowie einer Abstützplatte (49) bestehenden Dichtpakets (45) absperrbar ist, das in Ruhestellung unter der Vorspannung einer Feder (52) an einem Anschlag (50) anliegt.

15. Betätigungseinheit nach Anspruch 14, dadurch **gekennzeichnet**, daß die Abstützplatte (49) axiale Nachsaugbohrungen (53) aufweist.

16. Betätigungseinheit nach Anspruch 14, dadurch **gekennzeichnet**, daß der Kraftübertragungsbolzen (4) eine Ringfläche (51) aufweist, an der das Dichtpaket (45) bei Betätigung zur Anlage kommt.

17. Betätigungseinheit nach Anspruch 16, dadurch **gekennzeichnet**, daß der Kraftübertragungsbolzen (4,5) zweiteilig ausgeführt ist, wobei die Ringfläche (51) auf einem zweiten Teil des Kraftübertragungsbolzens (4,5) ausgebildet ist.

18. Betätigungseinheit nach Anspruch 14, dadurch **gekennzeichnet**, daß der Anschlag durch einen Sicherungsring (50) gebildet ist, der in einer im Hauptzylindergehäuse (6) ausgebildeten Ringnut (54) angeordnet ist, deren Breite größer ist als die Dicke des Sicherungsringes (50).

19. Betätigungseinheit nach Anspruch 14, dadurch **gekennzeichnet**, daß die hydraulische Verbindung durch einen von dem in den Druckmittelvorratsbehälter (3) hineinragenden Ende des Hauptzylindergehäuses (6) begrenzten Ringraum (55), eine im Ringraum (55) mündende axiale Nut (56) der Abstützplatte (49) sowie eine im Kraftübertragungsbolzen (4) senkrecht zu seiner Längsachse ausgebildete Querbohrung (57) gebildet ist, wobei die Querbohrung (57) in der an den Anschluß (18) anschließenden Kanal (41) mündet.

20. Betätigungseinheit nach einem der Ansprüche 14 bis 17, dadurch **gekennzeichnet**, daß die Feder (52) mit ihrem anderen Ende an einem zweiten Dichtpaket (46) abgestützt ist, das das Hauptzylindergehäuse (6) gegenüber dem Kraftübertragungsbolzen (4) abdichtet.

21. Betätigungseinheit nach Anspruch 20, dadurch **gekennzeichnet**, daß das zweite Dichtpaket (46) durch eine zylindrische Hülse (58) gebildet ist, die eine mit dem Kraftübertragungsbolzen (4) zusammenwirkende Dichtmanschette (59) sowie eine mit dem Hauptzylindergehäuse (6) zusammenwirkende Dichtung (62) aufnimmt.

## Claims

1. Operating unit for a hydraulic motor vehicle brake system, comprising a pneumatic brake booster (1) and a master brake cylinder arrangement (2) which is arranged functionally downstream of the brake booster (1) and has pressure spaces (9) separated from one another, wherein the brake booster (1) has a booster housing (20) whose interior space is subdivided by a movable wall (11) into a vacuum chamber (14) and a working chamber (15), wherein two force-transmitting bolts (4, 5) are arranged in parallel to the longitudinal axis of the brake booster (1) and have fastening elements which are associated with a vehicle body wall, and wherein the pressure spaces (9) are defined by tubular master cylinder housings (6, 7),
**characterized** in that the force-transmitting bolts (4, 5) extend through the booster housing (20) and the movable wall (11), and in that the master cylinder housings (6, 7) are displaceably guided on the force-transmitting bolts (4, 5) and are in a force-transmitting connection with an output member (19) which transmits both the input force and the boosting force of the brake booster (1).

2. Operating unit as claimed in claim 1,
**characterized** in that the ends of the force-transmitting bolts (4, 5) facing away from the vehicle body wall form hydraulic connections (18) communicating with the pressure spaces (9).

3. Operating unit as claimed in claim 1, wherein the movable wall includes a diaphragm disk and a rolling diaphragm in abutment thereon,
**characterized** in that the master cylinder housings (6, 7) are sealed against the movable wall (11) by the rolling diaphragm (13).

4. Operating unit as claimed in claim 3,
**characterized** in that the rolling diaphragm (13) forms rolling folds (23, 24) arranged concentrically around the master cylinder housings (6, 7).

5. Operating unit as claimed in claim 4,
**characterized** in that the diaphragm disk (12) has annular extensions (25, 26), which accommodate the rolling diaphragms (23, 24), in the area of passage of the master cylinder housings (6, 7).

6. Operating unit as claimed in claim 1,
**characterized** in that the transmission of force from the output member (19) to the master cylinder housings (6, 7) is performed by means of a control lever (30) which is tiltable over a limited range, is in contact with the output member (19) and cooperates with the master cylinder housings (6, 7) in a force-transmitting manner.

7. Operating unit as claimed in claim 6,
**characterized** in that a restoring spring (27) pretensioning the movable wall (11) in opposition to the direction of attachment is supported on the control lever (30).

8. Operating unit as claimed in any one of the preceding claims,
**characterized** in that compression springs (28, 29), which pretension the master cylinder housings (6, 7) against the control lever (30), are arranged coaxially to the master cylinder housings (6, 7).

9. Operating unit as claimed in claim 8, wherein the booster housing comprises two housing halves located opposite each other,
**characterized** in that the housing half (21) limiting the vacuum chamber (14) has passage openings (37), in which the master cylinder housings (6, 7) are guided in a sealed manner.

10. Operating unit as claimed in claim 9,
**characterized** in that seals (39, 40) are arranged in the passage openings (37), and connecting sockets (38) of a pressurized medium reservoir (3) which can be connected to the pressure spaces (9) are attached to the seals (39, 40).

11. Operating unit as claimed in any one of claims 8 through 10,
**characterized** in that the compression springs (28, 29) are supported in the area of the passage openings (37) on a guide pot (43, 44) each surrounding the seals (39, 40).

12. Operating unit as claimed in claim 2,
**characterized** in that the connection between the hydraulic connections (18) is via channels (41, 42) extending vertically to one another in the force-transmitting bolts (4, 5), wherein the channels (41) joining the hydraulic connections (18) are formed by central longitudinal holes of the force-transmitting bolts (4, 5).

13. Operating unit as claimed in any one of the preceding claims,
**characterized** in that a hydraulic connection, which can be shut off at the time of operation, is provided between the pressure spaces (9) and the pressurized medium reservoir (3).

14. Operating unit as claimed in claim 13,
**characterized** in that the hydraulic connection is adapted to be shut off by a sealing package (45), which is arranged so as to be displaceable within limits on the force-transmitting bolt (4) and comprises, e.g., a sealing sleeve (47), a separating washer (48) and a support plate (49), and the sealing package (45) is in abutment on a stop (50) in the resting position, pretensioned by a spring (52).

15. Operating unit as claimed in claim 14,
**characterized** in that the support plate (49) has axial feed holes (53).

16. Operating unit as claimed in claim 14,
**characterized** in that the force-transmitting bolt (4) has an annular surface (51), on which the sealing package (45) comes into abutment at the time of operation.

17. Operating unit as claimed in claim 16,
**characterized** in that the force-transmitting bolt (4, 5) has a two-part design, wherein the annular surface (51) is provided on a second part of the force-transmitting bolt (4, 5).

18. Operating unit as claimed in claim 14,
**characterized** in that the stop is configured as a circlip (50) that is arranged in an annular groove (54), which is provided in the master cylinder housing (6) and has a width that is greater than the thickness of the circlip (50).

19. Operating unit as claimed in claim 14,
**characterized** in that the hydraulic connection is provided by an annular space (55), which is limited by the end of the master cylinder housing (6) extending into the pressurized medium reservoir (3), an axial groove (56) of the support plate (49) which opens into the annular space (55), and a cross hole (57) that is provided in the force-transmitting bolt (4) vertically to the longitudinal axis of bolt (4), the cross hole (57) opening into the channel (41) joining the connection (18).

20. Operating unit as claimed in any one of claims 14 through 17,
**characterized** in that the spring (52) is supported with its other end on a second sealing package (46) which seals the master cylinder housing (6) in relation to the force-transmitting bolt (4).

21. Operating unit as claimed in claim 20,
**characterized** in that the second sealing package (46) is formed by a cylindrical sleeve (58) which accommodates a sealing sleeve (59) cooperating with the force-transmitting bolt (4) and a seal (62) cooperating with the master cylinder housing (6).

## Revendications

1. Unité d'actionnement, pour système de freinage hydraulique pour véhicule automobile, constituée d'un amplificateur de force de freinage (1) pneumatique et d'un agencement de maître-cylindre de frein (2) monté en aval de l'amplificateur de force de freinage (1) en ce qui concerne son action et comportant des chambres de pression (9, -) séparées l'une de l'autre, l'amplificateur de force de freinage (1) comprenant un boîtier d'amplificateur (20) dont la cavité est divisée par une cloison mobile (11) en une chambre à dépression (14) et une chambre de travail (15), tandis qu'il est prévu deux tiges de transmission de force (4, 5) qui sont disposées parallèlement à l'axe longitudinal de l'amplificateur de force de freinage (1) et portent des éléments de fixation qui sont associés à une cloison de carrosserie, les chambres de pression (9, -) étant ménagées dans des boîtiers de maître-cylindre (6, 7) tubulaires, caractérisée en ce que les tiges de transmission de force (4, 5) traversent le boîtier d'amplificateur (20) et la cloison mobile (11) et en ce que les boîtiers de maître-cylindre (6, 7) sont guidés d'une manière coulissante sur les tiges de transmission de force (4, 5) et sont solidaires, d'une manière transmettant les forces, d'un organe de sortie (19) qui transmet aussi bien la force d'entrée que la force d'amplification de l'amplificateur de force de freinage (1).

2. Unité d'actionnement selon la revendication 1, caractérisée en ce que les extrémités des tiges de transmission de force (4, 5) situées du côté opposé à la cloison de carrosserie forment des raccords hydrauliques (18, -) communiquant avec les chambres de pression (9, -).

3. Unité d'actionnement selon la revendication 1, dans laquelle la cloison mobile est constituée d'un plateau à membrane et d'une membrane à déroulement appliquée sur ce plateau, caractérisée en ce que l'étanchéité des boîtiers de maître-cylindre (6, 7) vis-à-vis de la cloison mobile (11) est assurée au moyen de la membrane à déroulement (13).

4. Unité d'actionnement selon la revendication 3, caractérisée en ce que la membrane à déroulement (13) forme des plis de déroulement (23, 24) disposés d'une manière concentrique autour des boîtiers de maître-cylindre (6, 7).

5. Unité d'actionnement selon la revendication 4, caractérisée en ce que le plateau à membrane (12) comporte, dans la zone de passage des boîtiers de maître-cylindre (6, 7), des parties en saillie (25, 26) annulaires qui servent à loger les plis de déroulement (23, 24).

6. Unité d'actionnement selon la revendication 1, caractérisée en ce que la transmission de force de l'organe de sortie (19) aux boîtiers de maître-cylindre (6, 7) s'effectue au moyen d'un levier de commande (30) qui est agencé de manière à pouvoir basculer d'une façon limitée et prend appui sur l'organe de sortie (19) et qui coopère, d'une manière transmettant les forces, avec les boîtiers de maître-cylindre (6, 7).

7. Unité d'actionnement selon la revendication 6, caractérisée en ce qu'un ressort de rappel (27) qui soumet la cloison mobile (11) à une précontrainte dans le sens opposé au sens d'actionnement prend appui sur le levier de commande (30).

8. Unité d'actionnement selon l'une des revendication précédentes, caractérisée en ce qu'il est prévu, disposés d'une manière coaxiale vis-à-vis des boîtiers de maître-cylindre (6, 7), des ressorts de compression (28, 29) qui soumettent les boîtiers de maître-cylindre (6, 7) à une précontrainte les appliquant sur le levier de commande (30).

9. Unité d'actionnement selon la revendication 8, dans laquelle le boîtier d'amplificateur est constitué de deux moitiés de boîtier se faisant face, caractérisée en ce que la moitié de boîtier (21) qui délimite la chambre à dépression (14) comporte des ouvertures de passage (37, -) dans lesquelles les boîtiers de maître-cylindre (6, 7) sont guidés d'une manière étanche.

10. Unité d'actionnement selon la revendication 9, caractérisée en ce qu'il est prévu, disposées dans les ouvertures de passage (37, -), des garnitures d'étanchéité (39, 40) dans lesquelles passent, en s'accrochant derrière elles, des collets de raccord (38) d'un réservoir de stockage d'agent de pression (3) agencé de façon à pouvoir communiquer avec les chambres de pression (9).

11. Unité d'actionnement selon l'une des revendications 8 à 10, caractérisée en ce que, dans la zone des ouvertures de passage (37, -), les ressorts de compression (28, 29) prennent chacun appui sur une cuvette de guidage (43, 44) respective, ces cuvettes de guidage entourant les garnitures d'étanchéité (39, 40).

12. Unité d'actionnement selon la revendication 2, caractérisée en ce que la liaison entre les raccords hydrauliques (18, -) et les chambres de pression (9) s'effectue par des conduits (41, 42) s'étendant perpendiculairement l'un à l'autre dans les tiges de transmission de force (4, 5), les conduits (41) qui se raccordent aux raccords hydrauliques (18, -) étant formés par des perçages longitudinaux centraux des tiges de transmission de force (4, 5).

13. Unité d'actionnement selon l'une des revendications précédentes, caractérisée en ce qu'une liaison hydraulique pouvant être bloquée lors de l'actionnement est prévue entre les chambres de pression (9, -) et le réservoir de stockage d'agent de pression.

14. Unité d'actionnement selon la revendication 13, caractérisée en ce que la liaison hydraulique peut être bloquée au moyen d'un empilement d'étanchéité (45) qui est disposé de manière à coulisser d'une façon limitée sur la tige de transmission de force (4) et est par exemple constitué d'une coupelle d'étanchéité (47), d'un disque de séparation (48) et d'une plaquette d'appui (49) et qui, en position de repos, prend appui sur une butée (50) sous l'effet de la précontrainte exercée par un ressort (2).

15. Unité d'actionnement selon la revendication 14, caractérisée en ce que la plaquette d'appui (49) comporte des perçages axiaux d'aspiration (53).

16. Unité d'actionnement selon la revendication 14, caractérisée en ce que la tige de transmission de force (4) comporte une surface annulaire (51) sur laquelle l'empilement d'étanchéité (45) vient en appui lors d'un actionnement.

17. Unité d'actionnement selon la revendication 16, caractérisée en ce que la tige de transmission de force (4, 5) est réalisée en deux parties, la surface annulaire (51) étant ménagée sur une seconde partie de la tige de transmission de force (4, 5).

18. Unité d'actionnement selon la revendication 14, caractérisée en ce que la butée est formée d'un circlip (50) disposé dans une gorge annulaire (54) qui est ménagée dans le boîtier de maître-cylindre (6) et dont la largeur est supérieure à l'épaisseur du circlip (50).

19. Unité d'actionnement selon la revendication 14, caractérisée en ce que la liaison hydraulique est constituée d'une chambre annulaire (55), délimitée par l'extrémité du boîtier de maître-cylindre (6) qui fait saillie dans le réservoir de stockage d'agent de pression (3), d'une rainure axiale (56) de la plaquette d'appui (42), qui débouche dans la chambre annulaire (55), et d'un perçage transversal (57) ménagé dans la tige de transmission de force (4) perpendiculairement à son axe longitudinal, le perçage transversal (57) débouchant dans le conduit (41) qui se raccorde au raccord (18).

20. Unité d'actionnement selon l'une des revendications 14 à 17, caractérisée en ce que le ressort (52) prend appui, par son autre extrémité, sur un second empilement d'étanchéité (46) qui assure l'étanchéité du boîtier de maître-cylindre (6) vis-à-vis de la tige de transmission de force (4).

21. Unité d'actionnement selon la revendication 20, caractérisée en ce que le second empilement d'étanchéité (46)
est formé d'un manchon cylindrique (58) qui sert à loger une coupelle d'étanchéité (59), coopérant avec la tige de transmission de force (4), et une garniture d'étanchéité (62) coopérant avec le boîtier de maître-cylindre (6).
